# EUROPÄISCHE PATENTSCHRIFT

(11) **EP 1 479 934 B1**
(45) Veröffentlichungstag und Bekanntmachung des Hinweises auf die Patenterteilung: **16.01.2008**
(21) Anmeldenummer: 04010615.5
(22) Anmeldetag: 05.05.2004
(51) Int. Cl.: F16D 21/06

(54) **Antriebsstrang**
Drive train
Système de transmission

(30) Priorität: 20.05.2003 DE 10322618; 13.06.2003 DE 10326599
(43) Veröffentlichungstag der Anmeldung: 24.11.2004
(73) Patentinhaber: LuK Lamellen und Kupplungsbau Beteiligungs KG, 77813 Bühl (DE)
(72) Erfinder: Meinhard, Rolf, 77815 Bühl (DE); Schneider, Matthias, 67850 Herrlisheim (FR)

(56) Entgegenhaltungen:
- EP-A- 1 195 537
- EP-A- 1 302 687
- DE-A1- 10 115 453
- US-A1- 2002 060 118

## Beschreibung

Die Erfindung betrifft einen Antriebsstrang mit einem Kupplungsaggregat zur Drehmomentübertragung zwischen einem Motor und einem Getriebe. Insbesondere betrifft die Erfindung derartige Kupplungsaggregate, die wenigstens eine Reibungskupplung beinhalten, über die der Motor und das Getriebe antriebsmäßig miteinander verbindbar und voneinander koppelbar sind, wobei die wenigstens eine Reibungskupplung über einen Betätigungsmechanismus ein- und ausrückbar ist, der in das Kupplungsaggregat integriert ist, wobei das Kupplungsaggregat radial fest und axial begrenzt verlagerbar über ein nicht rotierbares Bauteil des Betätigungsmechanismus am Getriebegehäuse abgestützt ist.

Kupplungsaggregate mit zwei Reibungskupplungen sind beispielsweise durch die DE 28 30 659 A1 bekannt geworden. Solche Kupplungsaggregate sind jedoch bezüglich des Aufbaues sehr aufwendig und daher teuer und benötigen auch aufgrund der Konstruktion ein sehr aufwendiges Betätigungssystem. In der Regel bauen derartige Kupplungsaggregate axial sehr lang, so dass die Kurbelwellen, die diese Aggregate aufnehme, entsprechend dimensioniert sein müssen. Des weiteren werden die von der Kurbelwelle erzeugten Axial- und Taumelschwingungen an das Getriebe und an den Betätigungsmechanismus weitergeleitet, so dass Verschleiß und Komforteinbußen auftreten.

Kupplungsaggregate der eingangs beschriebenen Art sind durch die US 2002/0060118 A1 bekannt geworden, wobei eine axiale Steckverbindung zwischen dem Getriebegehäuse und einem Teil des Betätigungsmechanismus vorgesehen ist.

Der vorliegenden Erfindung lag die Aufgabe zugrunde, einen Antriebsstrang der eingangs genannten Art zu schaffen, der eine verbesserte Funktion und einen einfachen Aufbau aufweist sowie eine kostengünstige Herstellung gewährleistet. Weiterhin soll der erfindungsgemäße Antriebsstrang in besonders einfacher Weise bedienbar sein, so daß ein verhältnismäßig preisgünstiges Betätigungssystem eingesetzt werden kann. Auch soll durch die besondere Ausgestaltung und Wirkungsweise eines erfindungsgemäß ausgestalteten Kupplungsaggregates dessen Montage zwischen Motor und Getriebe verbessert beziehungsweise optimiert werden und die vom Motor herrührenden Axial- und Taumelschwingungen isoliert werden..

Gemäß einer erfindungsgemäßen Ausgestaltung wird dies bei einer Ausgestaltung der eingangs beschriebenen Art dadurch gewährleistet, daß das nicht rotierende Bauteil getriebeseitig mittels eines ersten axial flexiblen Scheibenteils (207) mit dem Getriebegehäuse (206) verbunden ist.

In besonders vorteilhafter Weise kann die Erfindung für einen Antriebsstrang mit einer Doppelkupplung genutzt werden.

Die Doppelkupplung kann dabei zwei Kupplungsscheiben aufweisen, die jeweils mit einer Getriebeeingangswelle verbindbar sind. Das Getriebe kann dabei in vorteilhafter Weise ein sogenanntes Lastschaltgetriebe bilden. Eine der Kupplungen kann jedoch auch für einen Nebenabtrieb, über den beispielsweise Zusatzaggregate antreibbar sind, verwendet werden.

Gemäß der Erfindung ist das Kupplungsaggregat über einen Betätigungsmechanismus ein- und ausrückbar, welcher in dieses Kupplungsaggregat integriert ist. Der Betätigungsmechanismus kann dabei in das Kupplungsaggregat derart angeordnet beziehungsweise abgestützt sein, daß die Kupplungsbetätigungskräfte beziehungsweise Kupplungsschließkräfte innerhalb des Kupplungsaggregats abgefangen werden; das bedeutet also, daß die das Kupplungsaggregat bildenden Bauteile den Betätigungsmechanismus derart abstützen, daß sich der durch diese Kräfte innerhalb dieser Bauteile erzeugte Kraftfluß schließt.

In besonders vorteilhafter Weise kann sich der Betätigungsmechanismus über ein Lager an einem Gehäuse des Kupplungsaggregats abstützen. Über dieses Lager beziehungsweise diese Lagerung kann der Betätigungsmechanismus sowohl in axialer als auch in radialer Richtung innerhalb des Kupplungsaggregats positioniert sein. Durch eine derartige Ausgestaltung kann zumindest ein Bauteil des Betätigungsmechanismusses auch zur getriebeseitigen zentrierten Vormontage des Kupplungsaggregats verwendet werden. In vorteilhafter Weise kann dieses Bauteil durch ein nicht rotierbares Bauteil des Betätigungsmechanismusses gebildet sein.

Zur Unterstützung der zentrischen Halterung des Kupplungsaggregats getriebeseitig kann wenigstens eine Kupplungsscheibe des Kupplungsaggregats in einer vorzentrierten Position innerhalb der entsprechenden Reibungskupplung zentriert gehalten werden, so daß bei der getriebeseitigen Vormontage des entsprechenden Teilmoduls über die auf eine Getriebeeingangswelle aufschiebbare Nabe der Kupplungsscheibe zumindest eine Zentrierunterstützung gewährleistet werden kann.

In besonders vorteilhafter Weise kann das Kupplungsaggregat ein sogenanntes Zweimassensystem bilden, wobei die beiden Massen über den Drehschwingungsdämpfer drehelastisch gekoppelt sind. Die mit der Abtriebswelle des Motors verbindbaren Bauteile des Drehschwingungsdämpfers können dabei zumindest einen Teil einer Primärmasse bilden.

Für die Funktion des Kupplungsaggregats kann es besonders vorteilhaft sein, wenn zumindest eine der diese bildenden Reibungskupplungen als selbstnachstellende Reibungskupplung ausgebildet ist.

Sofern das Kupplungsaggregat eine Doppelkupplung bildet, kann es zweckmäßig sein, wenn beide Kupplungen zwangsweise schließbar sind, das heißt, daß die für die Drehmomentübertragung erforderliche Anpresskraft für die einzelnen Reibungskupplungen über das Betätigungssystem eingeleitet wird. Für manche Anwendungsfälle kann es jedoch auch zweckmäßig sein, wenn zumindest eine oder gar beide Reibungskupplungen derart aufgebaut sind, daß diese einen Energiespeicher - wie beispielsweise eine Tellerfeder - aufweisen, welcher die für die Drehmomentübertragung erforderliche Anpresskraft zumindest teilweise, vorzugsweise vollständig, aufbringt. Sofern der Energiespeicher nur einen Teil der erforderlichen Anpresskraft aufbringt, muß der für eine schlupffreie Drehmomentübertragung notwendige zusätzliche Teil der Anpresskraft über das Betätigungssystem der entsprechenden Kupplung aufgebracht werden. Die Kupplungen können dabei als gezogene oder gedrückte Kupplungen ausgebildet sein. Auch ist eine Kombination zweier unterschiedlicher Kupplungstypen möglich. So kann beispielsweise innerhalb des Kupplungsaggregats eine gezogene und eine gedrückte Kupplung Verwendung finden. Weiterhin können die auf die Ausrückmittel, wie zum Beispiel die Tellerfederzungen, einwirkenden Betätigungssysteme derart ausgebildet sein, daß sie auf diese Ausrückmittel sowohl eine Kraft in Schließrichtung als auch in Öffnungsrichtung der entsprechenden Reibungskupplung ausüben können.

In vorteilhafter Weise kann die zwischen dem nicht rotierenden Bauteil des Betätigungsmechanismusses und dem Getriebegehäuse vorgesehene Verbindung ein erstes Scheibenteil sein, das zur Kompensation von Axial- und/oder Taumelschwingung axial flexibel ausgestaltet sein kann. Dieses erste Scheibenteil kann in Verbindung mit einem zweiten axial flexiblen Scheibenteil, das motorseitig das Kupplungsaggregat aufnimmt, eine Dämpfungseinheit bilden, wobei die beiden Steifigkeiten der Scheibenteile aufeinander abgestimmt. Es hat sich gezeigt, dass es besonders vorteilhaft sein kann, wenn die axiale Steifigkeit des zweiten Scheibenteils größer als die des ersten Scheibenteils ist.

Nach einem weiteren erfinderischen Gedanken kann das erste Scheibenteil so ausgestaltet sein, dass eine insgesamt im wesentlichen neutrale Abstützung des Kupplungsaggregats in der Weise erfolgen kann, dass an Stellen, an denen die Getriebegehäusewand axiale Erhebungen aufweist, beispielsweise an den Lageraugen der Getriebeein- und - ausgangswelle, das erste Scheibenteil ausgeschnitten sein kann, so dass sie von den axialen Erhebungen durchdrungen wird.

Besonders vorteilhaft kann die Befestigung des ersten Scheibenteils im Bereich dessen Außenumfangs sein, so dass für eine axiale Flexibilität zwischen den Verbindungspunkten des Kupplungsaggregats und des Getriebegehäuses ein optimaler Radius zur Verfügung steht. Weiterhin kann die Befestigung radial außerhalb am Getriebegehäuse in Bereichen erfolgen, in denen eine Befestigung von außen leicht zugänglich ist.

Zur einfachen Montage des Motors mit dem Kupplungsaggregat und des Getriebes kann die Betätigungseinrichtung, zum Beispiel das erste Scheibenteil, Positioniermittel zum xieren der Verdrehposition zwischen Scheibenteil und Getriebegehäuse vor und/oder beim Zusammenbau von Motorgehäuse und Getriebegehäuse aufweisen.

Der Betätigungsmechanismus kann ein mechanisch oder elektrisch von außen betätigter Hebelmechanismus oder Rampenmechanismus sein, der mittels Zug- oder Drehbewegungen eine axial entlang der Getriebeeingangswelle gerichtete Hubbewegung zum Betätigen einer oder mehrerer Kupplungen ausführt. Hierzu seien beispielsweise die Patentanmeldung DE 103 13 739, WO00/15971 und DE 44 31 641 erwähnt.

Weiterhin kann der Betätigungsmechanismus ein konzentrisch um die Getriebeeingangswelle angeordneter Nehmerzylinder sein, der über einen oder mehrere, beispielsweise radial übereinander angeordnete Ringzylinder verfügt. Alternativ oder in Kombination zu hydraulische betätigten Ringzylindern oder über von außen betätigten Ausrückeinheiten können über den Umfang um die Getriebeeingangswelle verteilte Kolben/Zylindereinheiten vorgesehen sein, die im Falle zweier Kupplungen auf gleichem oder unterschiedlichem Radius angeordnet sein können.

Eine weitere Alternative oder Kombinationsmöglichkeit mit oben erwähnten Betätigungsmechanismen kann ein konzentrisch um die Getriebeeingangswelle angeordneter, elektrisch betätigter Ausrückmechanismus sein, der in der Kupplungsglocke, vorzugsweise konzentrisch um die Getriebeeingangswelle aufgenommen ist. Hierzu seien die Ausführungsbeispiele der Offenlegungsschrift WO01/03984 sowie allgemein bekannte Spindelantriebe erwähnt.

Weitere Vorteile bezüglich sowohl der Funktion als auch des Aufbaues eines erfindungsgemäßen Kupplungsaggregates sind in der folgenden Figurenbeschreibung näher erläutert.

Dabei zeigen:
- Figur 1: eine schematische Darstellung eines Kraftfahrzeuges mit Antriebsmotor, Kupplungsaggregat, Getriebe, nachgeschaltetem Antriebsstrang sowie Regel- beziehungsweise Steuereinrichtung,
- Figur 2: ein für den Einbau zwischen Motor und Getriebe ausgebildetes Kupplungsaggregat,
- Figur 3: eine dreidimensionale Skizze zur Anordnung einer Ausführungsform eines Betätigungssystems mit einem axial elastischen Scheibenteil und
- Figuren 4-6: verschiedene Ausführungsbeispiele mit einem mittels eines Schiebe- beziehungsweise Klemmsitzes auf dem Betätigungssystem befestigbaren axial elastischen Scheibenteil.

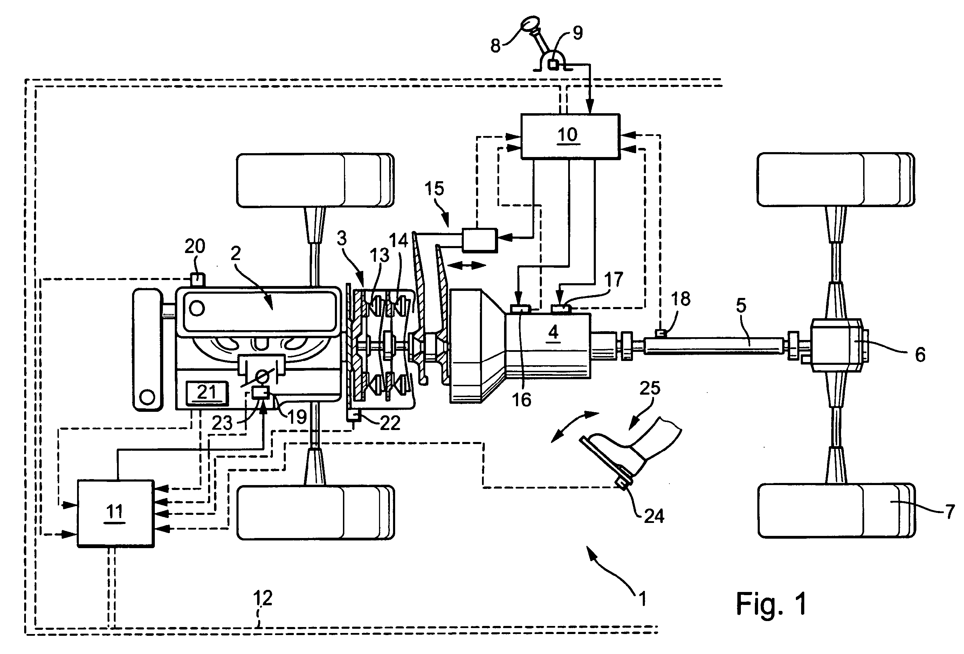

Figur 1 zeigt schematisch ein Kraftfahrzeug 1 mit einem Antriebsstrang, der einen als Verbrennungsmotor ausgebildeten Antriebsmotor 2, ein Kupplungsaggregat 3 und ein Getriebe 4 enthält. Über eine Antriebswelle 5 und ein Differential 6 werden die Räder 7 des Fahrzeuges 1 angetrieben. Sinngemäß kann es sich selbstverständlich auch um ein Fahrzeug mit einer oder mehreren anderen angetriebenen Achsen handeln.

Es ist eine Übersetzungswähleinrichtung 8, wie Wählhebel mit Sensor 9 und eine Steuereinrichtung 10,11 als Blockschaltbild gezeigt. Die Steuereinrichtung 10,11 kann als Einheit oder in baulich und/oder funktionell getrennten Teilbereichen ausgebildet sein. Falls die Steuereinrichtung 10,11 in baulich und/oder funktionell getrennten Teilbereichen ausgebildet ist, können diese beispielsweise über einen CAN-Bus 12 oder eine andere elektrische Verbindung zum Datenaustausch miteinander verbunden sein. Die Steuereinrichtung 10,11 steuert beispielsweise die automatisierte Betätigung des Getriebes 4 und/oder die zum Kupplungsaggregat 3 gehörenden Kupplungen 13, 14 oder den Motor 2, beispielsweise das Motormoment, die Wahl der Getriebeübersetzung, einer Parkstellung oder einer Neutralstellung des Getriebes 4 oder das von den Kupplungen 13, 14 übertragbare Drehmoment.

Die Kupplungen 13, 14 sind mittels einer Aktorik 15 vorzugsweise automatisiert betätigbar,
wobei die Kupplungen 13, 14 voneinander unabhängig betätigt werden können. Die Aktorik 15 zur Kupplungsbetätigung der Kupplungen 13, 14 kann in einer baulichen und/oder funktionellen Baueinheit oder in beispielsweise den einzelnen Kupplungen 13, 14 zugeordneten Teilbereichen ausgeführt werden.

Die Einrichtung zum Ändern des Übersetzungsverhältnisses des Getriebes umfaßt zumindest Getriebebetätigungseinrichtungen 16, 17, wobei jede der Getriebebetätigungseinrichtungen 16, 17 zur Betätigung einer Gruppe von Übersetzungsstufen vorgesehen sein können, die jeweils einer der Kupplungen 13, 14 zugeordnet sind.

Insbesondere können die Gruppen der Übersetzungsstufen derart gebildet sein, daß die Übersetzungsstufen bezüglich ihrer Übersetzung eine Reihenfolge bilden, so dass benachbarte Übersetzungsstufen jeweils unterschiedlichen Kupplungen 13, 14 zugeordnet werden können. Das Kupplungsaggregat 3 ermöglicht somit eine für einen Lastschaltbetrieb notwendige Betätigung der Kupplungen 13, 14 in übergehendem Wechsel zur zugkraftunterbrechungsarmen oder zugkraftunterbrechungsfreien Schaltung.

Die Übersetzung des Getriebes 4 ist durch eine Ansteuerung der Betätigungseinrichtungen 16, 17 veränderbar. Die Betätigungseinrichtungen 16, 17 können beispielsweise je zwei Antriebe zur Erzeugung einer Schalt- bzw. Wählbewegung umfassen.

Auch das Kupplungsaggregat 3 ist durch die Steuereinrichtung 10 mittels der Aktorik 15 automatisiert betätigbar.

Die Steuereinrichtung 44 empfängt Signale, die den Übertragungszustand der Kupplungen 13 und/oder 14 und die im Getriebe 4 eingestellten Übersetzungsverhältnisse wenigstens repräsentieren, sowie, falls erforderlich, Signale von einem Sensor 18 für die Abtriebsdrehzahl und einem Sensor 9 an der Übersetzungswähleinrichtung 8. Diese Signale werden von Sensoren ermittelt, wie von einem Gangerkennungssensor oder von einem Kupplungswegsensor.

Bereich 11 der Steuereinrichtung steuert den Verbrennungsmotor 2 über eine Verstellung der Drosselklappe und/oder der Einspritzung 19. Es werden Signale von Sensoren 20 für Saugrohrdruck 21, für Kühlwassertemperatur 22, für die Motordrehzahl 23, für die Stellung der Drosselklappe beziehungsweise Einspritzung 19 und 24 für eine Gaspedalbetätigung 25 empfangen. Sinngemäß kann die Erfindung selbstverständlich mit allen Arten von Antriebsmotoren verwendet werden.

Die Getriebebetätigungseinrichtungen 16, 17 umfassen beispielsweise je zwei Elektromotoren, wobei ein erster Elektromotor zur Betätigung des Wahlvorganges angesteuert wird und ein zweiter Elektromotor zur Betätigung des Schaltvorganges angesteuert wird. Hierzu wird mittels der Elektromotoren entlang der Wählstrecke bzw. der Schaltstrecke eine Verstelleinrichtung zumindest eines getriebeseitigen Schaltelementes betätigt.

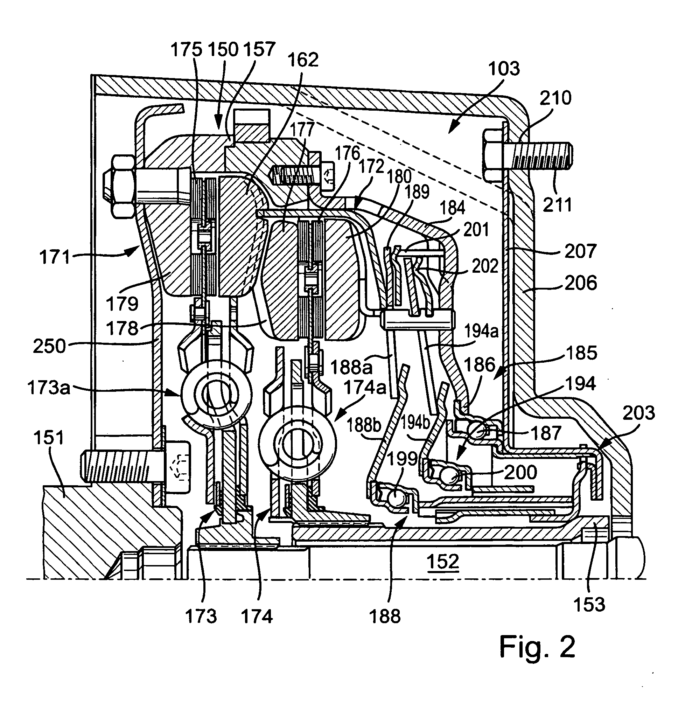

Das in der Figur 2 dargestellte Kupplungsaggregat 103 umfaßt eine Kupplungseinheit mit einer Doppelkupplung 150, die eine treibende Welle, wie insbesondere die Kurbelwelle 151 einer Brennkraftmaschine mit zwei antreibbaren Wellen, wie insbesondere Getriebeeingangswellen 152, 153 verbinden und von diesen trennen kann. Die Doppelkupplung 150 kann über einen Schwingungsdämpfer wie beispielsweise mittels eines Zweimassenschwungrads mit dem Motor verbunden sein, im gezeigten Ausführungsbeispiel ist diese jedoch axial elastisch mittels des Scheibenteils 250 an der Kurbelwelle in Umfangsrichtung starr aufgenommen. Das Scheibenteil 250 ist über radial innere Bereiche mit der Kurbelwelle 151 - hier mittels Schrauben 156 - fest verbunden und ist durch ein Blechformteil gebildet, welches radial außen die Schwungmasse 157 trägt.

Die Kupplungseinheit beziehungsweise Doppelkupplung 150 besitzt zwei Reibungskupplungen 171, 172, die jeweils eine Kupplungsscheibe 173, 174 mit integrierten Torsionsschwingungsdämpfer 173a, 174a, die zumindest im wesentlichen die vom Motor eingetragenen Torsionsschwingungen filtern, so dass diese zumindest nicht voll auf die Getriebewellen 152, 153 übertragen werden, umfassen. Die Kupplungsscheibe 173 ist auf der inneren Welle 152 und die Kupplungsscheibe 174 auf der hohlen äußeren, koaxial verlaufenden Welle 153 aufgenommen. Radial außen besitzen die Kupplungsscheiben 173, 174 Reibbereiche, welche bei dem dargestellten Ausführungsbeispiel durch ringförmige Reibbeläge 175, 176 gebildet sind. Das die Anpressplatte 162 für die Reibungskupplung 171 bildende ringförmige Bauteil 162 ist mit einem ein weiteren ringförmigen Bauteil 177 verbunden, welches die Gegendruckplatte für die Reibungskupplung 172 bildet. Anpressplatte 162 und Gegendruckplatte 177 sind über Verzahnungsbereiche 178 miteinander drehschlüssig verbunden. Die Reibungskupplung 172 besitzt eine Anpressplatte 180, die Gegendruckplatte 179 der Reibungskupplung 171 wird von der Schwungmasse 157 gebildet.

Die Schwungmasse 157 ist dem Kupplungsgehäuse 184, das hier aus Blech besteht, fest verbunden. Das Kupplungsgehäuse 184 dient gleichzeitig zur Zentrierung eines Betätigungsmechanismusses 185, über welchen die beiden Reibungskupplungen 171, 172 selektiv betätigbar sind. Zur Zentrierung des Betätigungsmechanismusses 185 besitzt das Kupplungsgehäuse 184 getriebeseitig eine Aufnahme in Form eines ringförmigen Ansatzes 186, der ein Lager 187 aufnimmt, welches den Ausrückmechanismus 185 gegenüber dem Kupplungsaggregat 103 zentriert beziehungsweise abstützt.

Die Betätigung der Reibungskupplung 171 beziehungsweise die axiale Verlagerung der Anpressplatte 162 erfolgt über ein Betätigungsmittel 188, welches auf ein Verspannelement 188a zugreift, das die Reibungskupplung zwangsweise offen hält und bei Betätigung des Betätigungselements 188 die Kupplung 171 schließt.

Die Reibungskupplung 172 ist über das Betätigungsmittel 194 betätigbar, welches bei dem dargestellten Ausführungsbeispiel auf das Verspannelement 194a zugreift. Bei dem dargestellten Ausführungsbeispiel sind beide Reibungskupplungen 171, 172 derart ausgestaltet, daß sie über die Betätigungsmittel 188, 194 zwangsweise geschlossen werden. Die für das Schließen der Reibungskupplungen 171, 172 erforderlichen Axialkräfte werden somit über den Betätigungsmechanismus 185 aufgebracht. Dieser Betätigungsmechanismus 185 umfaßt zwei die beiden Betätigungseinheiten 188, 194, die bei dem dargestellten Ausführungsbeispiel koaxial angeordnet und zumindest teilweise axial ineinander geschachtelt sein können. Diese Betätigungseinheiten umfassen ein axial verlagerbares Ausrücklager 199, 200. Die Ausrücklager 199, 200 besitzen einen verdrehbaren Ring, der auf die jeweils zugeordneten Zungenspitzen der Verspannelemente 188a und 194a mittels den Hebelementen 188b, 194b axial einwirken, um die für das zu übertragende Drehmoment erforderlichen Anpresskräfte auf die Anpressplatten 162, 180 einzuleiten.

Der Betätigungsmechanismus 185 kann zwei ineinander geschachtelte Kolben-Zylindereinheiten aufweisen, die vorzugsweise hydraulisch und/oder auch pneumatisch beaufschlagbar sein können. Die beiden Zylinder können dabei ein gemeinsames Gehäuseteil besitzen. In vorteilhafter Weise kann der Betätigungsmechanismus jedoch auch derart ausgebildet sein, daß wenigstens eine der Betätigungseinheiten als elektromechanischer Aktor ausgebildet ist. Bezüglich der Ausgestaltung und Funktionsweise eines solchen elektromechanischen Aktors wird insbesondere auf die deutsche Patentanmeldung 100 33 649 beziehungsweise auf die parallele französische Patentanmeldung 0008975 verwiesen. Das in diesen Anmeldungen offenbarte Prinzip der Umwandlung einer Rotationsbewegung in eine Axialbewegung mittels eines axial aufgewickelten Bandes kann in vorteilhafter Weise bei der Betätigungseinheit 197 und/oder 198 Anwendung finden. Insbesondere in Verbindung mit Figur 19 dieser beiden Anmeldungen ist ein Betätigungsmechanismus beziehungsweise eine Betätigungseinrichtung 1120 beschrieben, welche zwei koaxial angeordnete und zumindest teilweise axial ineinander geschachtelte Betätigungseinheiten 1120a und 1120b besitzt. Der diesbezügliche Inhalt dieser Anmeldungen soll ebenfalls als in die vorliegende Anmeldung integriert betrachtet werden, so daß die Ausgestaltung und Funktionsweise derartiger Betätigungsmechanismen in der vorliegenden Anmeldung nicht näher beschrieben werden muß.
Zwischen den Verspannelementen 188a, 194a und dem Kupplungsgehäuse 184 sind Nachstelleinrichtungen 201, 202 vorgesehen, welche zumindest teilweise die an den Reibbelägen 175, 176 auftretende Abnutzung ausgleicht. Für manche Anwendungsfälle kann es jedoch auch besonders vorteilhaft sein, wenn keine derartigen Nachstelleinrichtungen vorhanden sind oder aber nur eine der beiden Kupplungen 171, 172 eine derartige Nachstelleinrichtung besitzt.

Wie aus Figur 2 zu entnehmen ist, besitzt der Betätigungsmechanismus 185 ein Trägerbauteil 203, welches bei dem dargestellten Ausführungsbeispiel aus mehreren Einzelblechen geformt ist. Das Lager 187, welches bei dem dargestellten Ausführungsbeispiel durch ein Wälzlager in Form eines Kugellagers, das jedoch auch ein Gleitlager sein kann, gebildet ist, ist zwischen dem äußeren Kupplungsgehäuse 184 und dem Trägerteil 203 des Betätigungsmechanismusses 185 derart angeordnet, dass die von den Betätigungseinheiten auf die Betätigungsmittel 188, 194 ausgeübten Kräfte von diesem Lager 187 derart abgefangen werden, daß sich innerhalb der Kupplungseinheit 150 ein geschlossener Kraftfluß bildet. Dadurch wird vermieden, dass die Kupplungsbetätigungskräfte von der Kurbelwellenlagerung abgefangen werden müssen.

Wie aus Figur 2 weiterhin zu entnehmen ist, ist zwischen einem getriebeseitigen Bauteil 206 (zum Beispiel Getriebegehäuse) und einem nicht rotierenden Bauteil des Betätigungsmechanismusses 185 (hier das Gehäuseteil 203) eine Verbindung vorgesehen, die hier durch ein axial elastisches Scheibenteil 207 gebildet ist. Dieses Scheibenteil kann unter Vorspannung in der Weise vorgesehen sein, dass die Doppelkupplung 150 mit einer definierten Kraft axial in Richtung der Motorabtriebswelle 151 verspannt wird. Weiterhin kann das Scheibenteil 207 bezüglich seiner axialen Steifigkeit so ausgelegt sein, dass in Verbindung mit dem Scheibenteil 250 eine effektive Dämpfung von Axial- und/oder Taumelschwingungen des Motors gedämpft werden. Vorteilhafterweise ist hierzu die axiale Steifigkeit des Scheibenteils 207 kleiner las die des Scheibenteils 250. Neben der Abstützung des Betätigungsmechanismusses 185 stützt das Scheibenteil 207 über das Wälzlager 187 das gesamte Kupplungsaggregat 103 ab, so dass Eigenschwingungen und vom Motor induzierte Resonanzschwingungen weitgehend unterbunden werden können. Das Scheibenteil 207 ist radial außen an der Getriebegehäusewand 207 befestigt. Hierzu kann das Scheibenteil nach der Montage von Motor und Getriebe durch Öffnungen 210 von außen befestigt wie verschraubt oder vernietet werden oder das Scheibenteil 207 verfügt - wie hier gezeigt - über angebrachte Zapfen oder angeschweißte Schrauben 211, die die Öffnungen durchdringen und von außen gekontert werden. Hierzu können im Flanschbereich des Getriebegehäuses 206 entsprechende Einbuchtungen vorgesehen sein. Zur Positionierung des Scheibenteils auf die Öffnungen 210 können entsprechende Positioniermittel vorgesehen sein, die die Kurbelwelle 151 in die entsprechende Winkelposition bringen oder eine Verdrehung, insbesondere bei einem Betätigungsmechanismusses 185 auf Basis eines oder mehrerer Nehmerzylinder, bei denen Kolben und Gehäuse gegeneinander verdrehbar sind, des Trägerteils gegen das von ihm getragene Teil mit anschließender Fixierung in der zu den Öffnungen 210 fluchtenden Position.

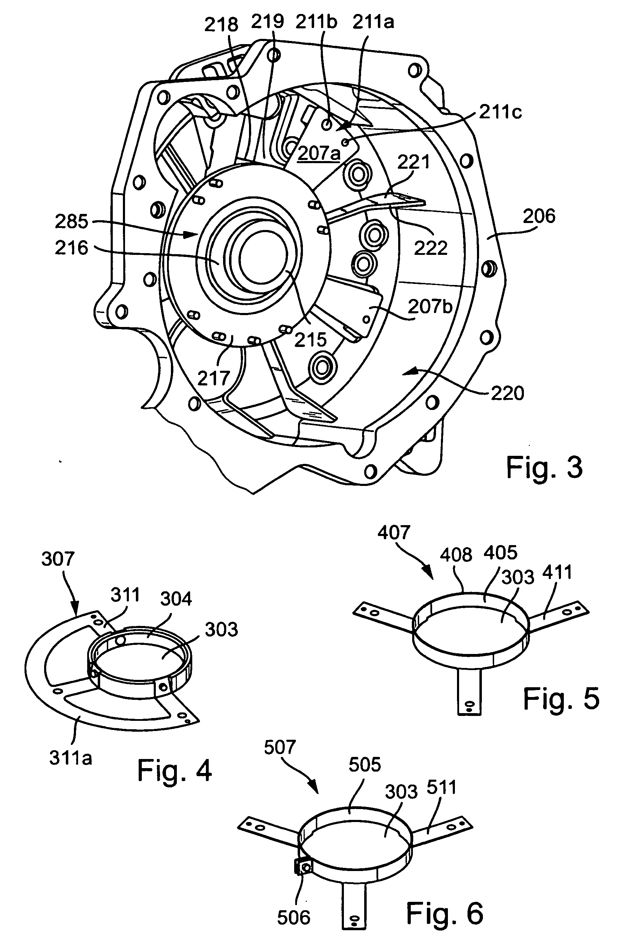

Hierzu zeigt die Figur 3 eine Einbausituation eines Betätigungsmechanismusses 285 als konzentrisch um die - nicht dargestellte - Getriebeeingangswelle angeordneten Nehmerzylinders für eine Doppelkupplung mit zwei Ringkolben 215, 216, die jeweils eine Kupplung betätigen, wobei sie über jeweils eine Zuleitung 218, 2219 von einem Geberzylinder betätigt werden.

Der Übersicht halber ist der an sich am Deckel des Kupplungsaggregats (siehe Figur 1) mittels des Flansches 217 verbundene wie verschweißte, vernietete oder anderweitig drehfest und axial fest angebrachte Betätigungsmechanismus 285 ohne das Kupplungsaggregat dargestellt. Die als ein Scheibenteil oder als getrennte Flügel 207a, 207b mit dem Gehäuse des Betätigungsmechanismusses 285 verbundene radiale Abstützung ist radial außen mit dem Getriebegehäuse 206 verbunden, wodurch das Kupplungsaggregat an dem Getriebe axial flexibel und radial fest abgestützt ist. In der Kupplungsglocke 220 können Führungsmittel wie Nuten 221, die entsprechend mit am Betätigungsmittel 285 angeordneten, zu diesen komplementären Führungsmittel 222 zusammenwirken, vorgesehen sein, die während der Montage von Motor und Getriebe den Betätigungsmechanismus 285 so zentrieren, dass der Zusammenbau durch Fluchten der Befestigungsmittel 211a zwischen Getriebe und Scheibenteil 207a, 207b erleichtert wird. Es versteht sich, dass die Führungsmittel 221, 222 vom Getriebetyp abhängig sind und für jedes Getriebe in vorteilhafter Weise unter Verwendung möglichst weniger Bauteile unterschiedlich ausgestaltet werden können und müssen. Die Befestigungsmittel 211 a sind bei dem in Figur 3 dargestellten Ausführungsbeispiel durch Schrauben gebildet, die von außen durch das Getriebegehäuse 206 geschraubt werden, wobei an den Flügeln 207a, 207b ein Gewinde und Bolzen 211c vorgesehen sind, wobei die Bolzen 211c in das Getriebegehäuse eingreifen und die Flügel 207a, 207b während des Zusammenbaus zentrieren und während des Betriebs die Verbindung verstärken können. Es versteht sich, dass gemäß des erfinderischen Gedankens nicht abschließend beispielsweise Bolzenverbindungen, Rastverbindungen und dergleichen enthalten sind, wobei im einfachsten Fall eine Fixierung des Scheibenteils bzw. der Scheibenteile oder Flügel 207a, 207b in Umfangsrichtung, beispielsweise mittels einer Steckverbindung, am Getriebegehäuse ausreichend sein kann, wenn eine axiale Vorspannung zwischen Scheibenteil und Getriebegehäuse ein axiales Ausweichen des Scheibenteils verhindert.

Die Figuren 4 bis 6 zeigen jeweils ein axial elastisches Scheibenteil 307, 407, 507 mit einem in den einzelnen Ausführungsbeispielen unterschiedlichen ringförmigen Bauteil 304, 405, 505, in dessen Öffnung 303 der Betätigungsmechanismus, an dem hierzu eine komplementäre Aufnahmefläche ausgebildet ist, aufgenommen wird. In den Figuren 4 und 5 sind die ringförmigen Bauteile 304, 405 zur Bildung eines Schiebesitzes mit dem Betätigungsmechanismus ausgebildet, während das ringförmige Bauteil über einen einstellbaren Umfang verfügt, der nach der Montage mit der Aufnahmefläche des Betätigungsmechanismusses verspannt wird. Hierzu können Mittel 506 entsprechend der Funktion einer Schlauchschelle wie beispielsweise den Umfang verengende Schrauben verwendet werden. Die ringförmigen Bauteile können wie in Figur 5 gezeigt über entsprechende Einfuhrschrägen 408 für den Betätigungsmechanismus verfügen. Die axial elastischen Scheibenteile 307, 407, 507 können einstückig oder mehrstückig gefertigt sein und mittels Stanz-, Tiefzieh-, und/oder Querfließpressverfahren und dergleichen gefertigt sein, wobei es vorteilhaft sein kann, die Flügel 311 einzeln oder über einen äußeren Ring 311a zu einem einzigen Bauteil verbunden an dem Ring 304 zu befestigen, beispielsweise mittels Nieten, Schweißen wie Punktschweißen, Laserschweißen und dergleichen. Die Flügel 411, 511, können alternativ einstückig mit dem ringförmigen Bauteil gefertigt werden, wobei planes Material verwendet und das Ringteil 405, 505 entsprechend angeformt werden kann oder Rundmaterial mit anschließendem Umlegen der Flügel 411, 511 eingesetzt werden kann. Das elastische Scheibenteil 307, 407, 507 wird von außen oder innen an der Kupplungsglocke mittels Verschraubung, Vernietung oder Verstiftung befestigt und bei der Montage von Motor und Getriebe mit dem Betätigungsmechanismus verbunden. Eine Ausrichtung der Winkelpositionen zwischen dem motorseitig montierten Kupplungsaggregat mit angeflanschtem Ausrückmechanismus und dessen getriebeseitigen Befestigung entfällt dadurch. Die Ausrichtung der Flügel 311, 411, 511 kann vorteilhafterweise gleichmäßig über den Umfang verteilt oder unregelmäßig sein, die Flügel können diametral entgegengesetzt sein. Dabei wird die notwendige axiale Steifigkeit mittels der Materialdicke, der Flügelbreite und -länge und/oder verstärkenden Elementen wie des Ringes 311a eingestellt.

## Patentansprüche

1. Antriebsstrang mit einem Motor (2), einem Getriebe (4) mit einem Getriebegehäuse (206) und zumindest einer Getriebeeingangswelle (152, 153) sowie einem zur Drehmomentübertragung dazwischen schaltbaren Kupplungsaggregat (103), wobei das Kupplungsaggregat zumindest eine Reibungskupplung (171, 172) enthält, die über einen Betätigungsmechanismus (185) ein- und ausrückbar ist, der in das Kupplungsaggregat integriert ist, wobei das Kupplungsaggregat radial fest und axial begrenzt verlagerbar über ein nicht rotierbares Bauteil (203) des Betätigungsmechanismus am Getriebegehäuse (206) abgestützt ist, **dadurch gekennzeichnet, dass** das nicht rotierende Bauteil (203) getriebeseitig mittels eines ersten axial flexiblen Scheibenteils (207) mit dem Getriebegehäuse (206) verbunden ist.

2. Antriebsstrang nach Anspruch 1, **dadurch gekennzeichnet, daß** der Betätigungsmechanismus (185) in das Kupplungsaggregat derart integriert ist, daß die Kupplungsbetätigungskräfte und Kupplungsschließkräfte innerhalb des Kupplungsaggregats abgefangen werden.

3. Antriebsstrang nach einem der Ansprüche 1 oder 2, **dadurch gekennzeichnet, daß** der Betätigungsmechanismus (185) sich über ein Lager (187) an einem Kupplungsgehäuse (184) verdrehbar abstützt.

4. Antriebsstrang nach einem der Ansprüche 1 bis 3, wobei das Kupplungsaggregat auf der Kurbelwelle (151) mittels eines axial flexiblen und in Umfangsrichtung steifen zweiten Scheibenteils (250) aufgenommen ist, wobei die axiale Steifigkeit des ersten Scheibenteils (207) kleiner als die axiale Steifigkeit des zweiten Scheibenteils (250) ist.

5. Antriebsstrang nach einem der Ansprüche 1 bis 4, **dadurch gekennzeichnet, dass** das erste Scheibenteil (207) Ausnehmungen (210) aufweist, die von im Getriebegehäuse im Bereich des Montageraums des ersten Scheibenteils axial hervorstehenden Gehäusebereichen durchdrungen werden.

6. Antriebsstrang nach einem der Ansprüche 1 bis 5, **dadurch gekennzeichnet, dass** das erste Scheibenteil (207) radial außen mit dem Getriebegehäuse (206) verbunden ist.

7. Antriebsstrang nach einem der Ansprüche 1 bis 6, **dadurch gekennzeichnet, dass** das erste Scheibenteil (206) Positioniermittel(222) zum Fixieren der Verdrehposition zwischen Scheibenteil und Getriebegehäuse vor und/oder beim Zusammenbau von Motorgehäuse und Getriebegehäuse aufweist.

8. Antriebsstrang nach einem der Ansprüche 1 bis 7, **dadurch gekennzeichnet, dass** der Betätigungsmechanismus (185) ein mechanisch von außen betätigter Hebelmechanismus (15) ist.

9. Antriebsstrang nach einem der Ansprüche 1 bis 8, **dadurch gekennzeichnet, dass** der Betätigungsmechanismus (185) ein konzentrisch um die Getriebeeingangswelle angeordneter Nehmerzylinder ist.

10. Antriebsstrang nach einem der vorhergehenden Ansprüche 1 bis 7, **dadurch gekennzeichnet, dass** der Betätigungsmechanismus (185, 285) ein konzentrisch um die Getriebeeingangswelle(152, 153) angeordneter, elektrisch betätigter Ausrückmechanismus ist.

11. Antriebstrang nach einem der vorhergehenden Ansprüche 1 bis 10, **dadurch gekennzeichnet, dass** der Betätigungsmechanismus (185) und das erste axial flexible Scheibenteil (207) mittels eines Schiebesitzes aufeinander gelagert sind.

12. Antriebsstrang nach einem der Ansprüche 1 bis 11, **dadurch gekennzeichnet, dass** zwischen dem Betätigungsmechanismus (185, 285) und dem getriebeseitig montierten ersten axial flexiblen Scheibenteil (207) Mittel vorgesehen sind, mittels derer zwischen diesen eine feste Verbindung nach der Montage von Motor- und Getriebeeinheit herstellbar ist.

## Claims

1. Power train having an engine (2), a transmission (4) with a transmission housing (206) and at least one transmission input shaft (152, 153), as well as a clutch unit (103) connectable between them to transfer torque, the clutch unit (103) including at least one friction clutch (171, 172) which is engageable and disengageable by way of an actuating mechanism (185) that is integrated into the clutch unit, the clutch unit being supported on the transmission housing (206) by means of a non-rotating component (203) of the actuating mechanism so that it is radially fixed and capable of limited axial movement, **characterized in that** the non-rotating component (203) is connected on the transmission side with the transmission housing (206) by means of a first axially flexible plate piece (207).

2. Power train according to Claim 1, **characterized in that** the actuating mechanism (185) is integrated into the clutch unit in such a way that the clutch actuating forces and clutch engaging forces are captured within the clutch unit.

3. Power train according to one of Claims 1 or 2, **characterized in that** the actuating mechanism (185) is rotatably supported on a clutch housing (184) through a bearing (187).

4. Power train according to one of Claims 1 through 3, wherein the clutch unit is received on the crankshaft (151) by means of a second plate piece (250) that is axially flexible and rigid in the circumferential direction, the axial rigidity of the first plate piece (207) being less than the axial rigidity of the second plate piece (250).

5. Power train according to one of Claims 1 through 4, **characterized in that** the first plate piece (207) has cutouts (210) that are penetrated by areas of the transmission housing that protrude axially in the transmission housing in the area of the installation space of the first plate piece.

6. Power train according to one of Claims 1 through 5, **characterized in that** the first plate piece (207) is connected radially on the outside with the transmission housing (206).

7. Power train according to one of Claims 1 through 6, **characterized in that** the first plate piece (206) has positioning means (222) to fix the rotational position between plate piece and transmission housing before and/or during assembly of the engine housing and transmission housing.

8. Power train according to one of Claims 1 through 7, **characterized in that** the actuating mechanism (185) is a lever mechanism (15) operated mechanically from outside.

9. Power train according to one of Claims 1 through 8, **characterized in that** the actuating mechanism (185) is a slave cylinder situated concentrically around the transmission input shaft.

10. Power train according to one of the preceding Claims 1 through 7, **characterized in that** the actuating mechanism (185, 285) is an electrically operable release mechanism situated concentrically around the transmission input shaft (152, 153).

11. Power train according to one of the preceding Claims 1 through 10, **characterized in that** the actuating mechanism (185) and the first axially flexible plate piece (207) are supported on each other by means of a sliding fit.

12. Power train according to one of Claims 1 through 11, **characterized in that** means are provided between the actuating mechanism (185, 285) and the first axially flexible plate piece (207) mounted on the transmission side, by means of which a solid connection can be produced between these components after the engine and transmission units have been installed.

## Revendications

1. Système de transmission avec un moteur (2), une boîte de vitesses (4) munie d'un carter de boîte de vitesses (206), et au moins un arbre d'entrée de boîte de vitesses (152, 153) ainsi qu'un groupe d'embrayage (103) pouvant être couplé entre cela pour transmettre un couple, le groupe d'embrayage contenant au moins un embrayage à friction (171, 172) qui peut être embrayé et débrayé par l'intermédiaire d'un mécanisme d'actionnement (185) intégré dans le groupe d'embrayage, ledit groupe d'embrayage étant appuyé contre le carter de boîte de vitesses (206) de façon fixe dans le sens radial et pouvant être déplacé de manière limitée dans le sens axial par l'intermédiaire d'un composant non rotatif (203) du mécanisme d'actionnement, **caractérisé en ce que** le composant non rotatif (203) côté boîte de vitesses est relié au moyen d'un premier élément de disque (207) axialement flexible au carter de boîte de vitesses (206).

2. Système de transmission selon la revendication 1, **caractérisé en ce que** le mécanisme d'actionnement (185) est intégré de telle façon dans le groupe d'embrayage que les forces d'actionnement de l'embrayage et les forces de fermeture de l'embrayage sont interceptées à l'intérieur du groupe d'embrayage.

3. Système de transmission selon l'une des revendications 1 ou 2, **caractérisé en ce que** le mécanisme d'actionnement (185) s'appuie par l'intermédiaire d'un palier (187) contre un carter de boîte de vitesses (184) de manière à pouvoir tourner.

4. Système de transmission selon l'une des revendications 1 à 3, le groupe d'embrayage étant logé sur le vilebrequin (151) au moyen d'un second élément de disque (250) axialement flexible et rigide dans le sens du pourtour, la rigidité axiale du premier élément de disque (207) étant plus faible que la rigidité axiale du second élément de disque (250).

5. Système de transmission selon l'une des revendications 1 à 4, **caractérisé en ce que** le premier élément de disque (207) comporte des creux (210) qui sont traversés par des zones de carter en saillie axialement dans le carter de boîte de vitesses dans la zone de l'espace de montage du premier élément de disque.

6. Système de transmission selon l'une des revendications 1 à 5, **caractérisé en ce que** le premier élément de disque (207) est relié radialement à l'extérieur au carter de boîte de vitesses (206).

7. Système de transmission selon l'une des revendications 1 à 6, **caractérisé en ce que** le premier élément de disque (206) comporte des moyens de positionnement (222) destinés à fixer la position de rotation entre élément de disque et carter de boîte de vitesses avant et/ou pendant l'assemblage du carter de moteur et du carter de boîte de vitesses.

8. Système de transmission selon l'une des revendications 1 à 7, **caractérisé en ce que** le mécanisme d'actionnement (185) est un mécanisme à levier (15) actionné mécaniquement de l'extérieur.

9. Système de transmission selon l'une des revendications 1 à 8, **caractérisé en ce que** le mécanisme d'actionnement (185) est un cylindre récepteur disposé de façon concentrique autour de l'arbre d'entrée de boîte de vitesses.

10. Système de transmission selon l'une quelconque des revendications précédentes 1 à 7, **caractérisé en ce que** le mécanisme d'actionnement (185, 285) est un mécanisme de débrayage actionné électriquement, disposé de façon concentrique autour de l'arbre d'entrée de boîte de vitesses (152, 153).

11. Système de transmission selon l'une quelconque des revendications précédentes 1 à 10, **caractérisé en ce que** le mécanisme d'actionnement (185) et le premier élément de disque (207) flexible axialement sont logés l'un sur l'autre au moyen d'un ajustement appuyé.

12. Système de transmission selon l'une des revendications 1 à 11, **caractérisé en ce qu'**il est prévu, entre le mécanisme d'actionnement (185, 285) et le premier élément de disque (207) flexible axialement monté côté boîte de vitesse, des moyens à l'aide desquels une liaison fixe peut être établie entre ceux-ci après le montage de l'unité de moteur et de boîte de vitesses.
